# EUROPÄISCHE PATENTSCHRIFT

(11) **EP 2 607 713 B1**
(45) Veröffentlichungstag und Bekanntmachung des Hinweises auf die Patenterteilung: **08.11.2017**
(21) Anmeldenummer: 11194884.0
(22) Anmeldetag: 21.12.2011
(51) Int. Cl.: F04D 29/22, F04D 29/62

(54) **Laufrad**
Radial pump rotor
Roue radiale de pompe

(43) Veröffentlichungstag der Anmeldung: 26.06.2013
(73) Patentinhaber: Grundfos Holding A/S, 8850 Bjerringbro (DK)
(72) Erfinder: Boll, Jens Vestergaard, 8850 Bjerringbro (DK)
(74) Vertreter: Patentanwälte Vollmann & Hemmer

(56) Entgegenhaltungen:
- EP-A1- 0 283 825
- DE-A1- 4 402 493
- DE-U1- 29 904 668
- JP-A- 59 211 795
- US-A1- 2007 098 556

## Beschreibung

Die Erfindung betrifft ein Laufrad für eine Kreiselpumpe sowie eine Kreiselpumpe mit einem solchen Laufrad.

Laufräder kommen in zahlreichen Typen von Kreiselpumpen zum Einsatz. Laufräder haben oft eine ziemlich komplexe Geometrie, die es schwer macht, sie durch Spritzgießen herzustellen. Daher ist es in vielen Fällen nötig, zwei separate Teile herzustellen und diese dann zusammenzufügen.

Bei Laufrädern aus Kunststoff, welche beispielsweise aus Faserverstärkten Kunststoffmaterialien wie Polymer- oder Kunststoffverbundwerkstoffe hergestellt sind, werden die Teile der Laufräder z. B. durch Ultraschall-Schweißen verbunden (Siehe dazu z.B. DE 299 04 668U). Ultraschall-Schweißen verursacht jedoch oft Asymmetrien in den Laufrädern. Einer der Hauptnachteile bei der Verwendung von Ultraschall-Schweißen ist, dass bei ultraschallgeschweißten Laufrädern Probleme hinsichtlich der Exzentrizität der Laufräder auftreten können.

Ultraschallschweißen ist im Stand der Technik zum Verbinden komplexer Kunststoffteile bekannt. Diese Teile werden üblicherweise zwischen einem festen Teil und einen weiteren Teil sandwichartig eingelegt, welches mit einem Transducer verbunden ist, um eine akustische Vibration einzukoppeln.

Der Ultraschall erzeugt eine Verbindung, wenn die Kontaktpunkte zwischen den Teilen zu schmelzen beginnen. Ultraschallschweißen verursacht lokales Schmelzen des Kunststoffs aufgrund der Absorption der Vibrationsenergie, und somit kann es stellenweise zu Verformungen kommen, was die genannten Asymmetrien des Laufrads verursacht.

Damit das Laufrad nicht asymmetrisch wird, werden bei manchen Laufrädern des Standes der Technik die Teile unter Verwendung mechanischer Verbindungsmethoden und Laserschweißen verbunden. Mechanische Verbindungen werden realisiert, indem eines der Laufrad-Teile nutenartige Strukturen erhält. Aufgrund von Ungenauigkeiten der nutenartigen Strukturen können derartige Laufräder aber ebenfalls asymmetrisch ausfallen.

Dementsprechend kann ein erhöhter Leckagefluss zwischen der Saugseite und dem Pumpengehäuse des Laufrads auftreten, was zu einer verringerten Effizienz der Pumpe, in welcher das Laufrad eingesetzt ist, führt.

Daher ist es eine Aufgabe der vorliegenden Erfindung, ein Laufrad bzw. eine Kreiselpumpe anzugeben, welche diese Nachteile zumindest teilweise vermeidet. Eine weitere Aufgabe der vorliegenden Erfindung ist es, ein Laufrad anzugeben, welches ausgelegt ist, die Effizienz der Pumpe zu erhöhen, wenn es in einer Pumpe eingesetzt ist.

Diese Aufgaben werden durch ein Laufrad und eine Kreiselpumpe gemäß den unabhängigen Ansprüchen gelöst. Vorteilhafte Weiterbildungen der Erfindung sind in den Unteransprüchen, der nachfolgenden Beschreibung und der Zeichnung angegeben.

Bereitgestellt wird also ein Laufrad für eine Kreiselpumpe mit einer eine Anzahl von Schaufeln aufweisenden ersten Deckscheibe und einer mittels Schweißen an die erste Deckscheibe angefügte zweiten Deckscheibe, wobei jede Schaufel einen Scheitelbereich aufweist, an welchem sie die zweite Deckscheibe kontaktiert. Erfindungsgemäß ist dabei zumindest eine Schaufel von der Anzahl von Schaufeln in einem ersten Abschnitt des Scheitelbereichs über eine Schweißverbindung mit der zweiten Deckscheibe verbunden, und in zumindest einem zweiten Abschnitt des Scheitelbereichs frei von einer Schweißverbindung.

Bei einer bevorzugten Ausführungsform der Erfindung weist der Scheitelbereich einen dritten Abschnitt auf, der frei von einer Schweißverbindung ist.

Der erste Abschnitt des Scheitelbereichs kann sich vorteilhaft über eine Länge erstrecken, welche größer als eine Gesamtlänge des zweiten und dritten Abschnitts des Scheitelbereichs ist.

Vorteilhaft ist der erste Abschnitt in der Mitte des Scheitelbereichs, der zweite Abschnitt an einem äußeren Randbereich des Scheitelbereichs und der dritte Abschnitt an einem inneren Randbereich des Scheitelbereichs jeweils bezogen auf den Laufraddurchmesser der zumindest einen Schaufel angeordnet sein.

Der zweite Abschnitt kann sich über eine Länge des Scheitelbereichs erstrecken, welche 1 % bis 20 %, insbesondere 5 % bis 10 %, der Gesamtlänge des Scheitelbereichs ausmacht.

Der dritte Abschnitt kann sich über eine Länge des Scheitelbereichs erstrecken, welche 1 % bis 40 %, insbesondere 10 % bis 20 %, der Gesamtlänge des Scheitelbereichs ausmacht. Erfindungsgemäß ist eine von den ersten und zweiten Deckscheiben aus lichtdurchlässigem Material und die andere von den ersten und zweiten Deckscheiben zumindest teilweise aus lichtabsorptivem Material hergestellt. Es kann gegebenenfalls nur der erste Abschnitt des Scheitelbereichs aus lichtabsorptiven Material hergestellt sein.

Das lichtabsorptive Material kann ein Kunststoff mit Pigmenten sein, und das lichtdurchlässige Material kann der gleiche Kunststoff ohne Pigmente sein.

Die erste Deckscheibe kann vorteilhaft nutenlos ausgebildet sein.

Besonders vorteilhaft ist es, wenn die Schweißverbindung mittels Laserschweißen hergestellt wird.

Die Erfindung umfasst auch eine Kreiselpumpe mit einem oder mehreren der zuvor beschriebenen Laufräder.

Durch die Erfindung wird besonders vorteilhaft erreicht, dass sich die Stellen der Deckscheiben, an denen sie verschweißt sind, beim Schweißvorgang nicht verformen. Darüber hinaus kann eine Exzentrizität der beiden Scheiben vermieden werden, weil aufgrund des Fehlens von Nuten, wie sie im Stand der Technik benötigt werden, die Scheiben vor dem Verschweißen radial gegeneinander bewegt werden können, so dass sie gut zueinander justiert werden können. Die trägt dazu bei, dass die Saugseite der Pumpe im Betrieb besonders gut gegen das Pumpengehäuse dichtet, was die Effizienz der entsprechend der Erfindung gefertigten Pumpe erhöht.

Die Erfindung wird nachfolgend anhand von in der Zeichnung dargestellten Ausführungsbeispielen erläutert. Es zeigen
- Fig. 1: eine Explosionsdarstellung einer ersten Ausführungsform gemäß der Erfindung;
- Fig. 2: eine Explosionsdarstellung einer weiteren Ausführungsform gemäß der Erfindung
- Fig. 3: eine Ansicht auf die hintere mit Schaufeln versehene Deckscheibe und
- Fig. 4: eine querschnittsartige Explosionsdarstellung eines Laufrads gemäß der Erfindung.

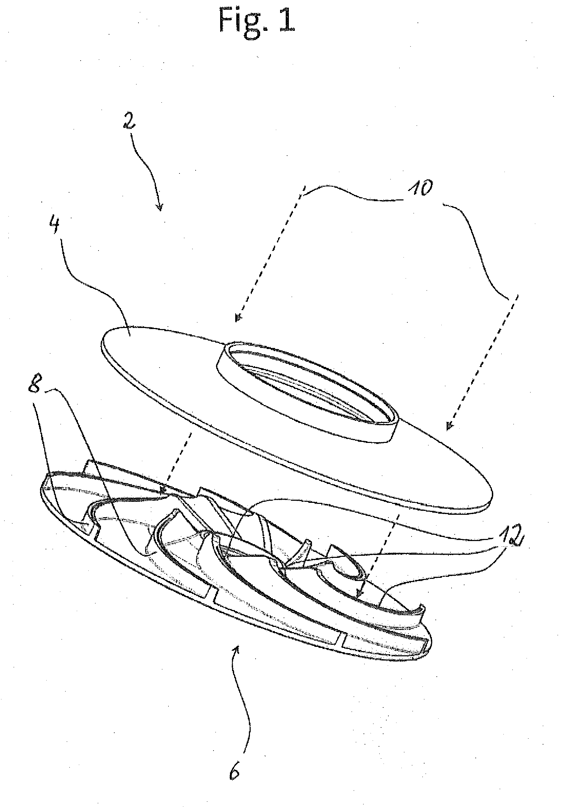

Ein Laufrad 2 für eine Kreiselpumpe gemäß Fig. 1 umfasst eine erste, hintere Deckscheibe 6, welche eine Anzahl von Schaufeln 8 aufweist, und eine mittels Schweißen an die hintere Deckscheibe 6 bzw. den Schaufeln 8 angefügte zweite, vordere Deckscheibe 4. Jede Schaufel 8 weist einen Scheitelbereich 12 auf, an welchem sie die vordere Deckscheibe 4 kontaktiert. Zumindest eine Schaufel 8, im vorliegenden Ausführungsbeispiel aber alle Schaufeln 8, weisen in einem ersten Abschnitt 20 des Scheitelbereichs 12 eine Schweißverbindung mit der vorderen Deckscheibe 4 auf, und in einem zweiten, äußeren Abschnitt 14 und einem dritten, inneren Abschnitt 16 des Scheitelbereichs 12 ist sie frei von einer Schweißverbindung.

Die vordere Scheibe 4 und die hintere Scheibe 6 sind voneinander durch die Schaufeln 8 beabstandet. Die vordere Scheibe 4 ist aus einem für Laserlicht transmissiven Material gefertigt, so dass Laserlicht 10 durch die vordere Scheibe 4 hindurchtreten kann, wie in Fig. 1 dargestellt ist. Die hintere Scheibe 6 umfasst neun Schaufeln 8, die jeweils gebogen sind und sich von einer zentralen Ausnehmung in der Mitte der hinteren Platte 6 gegen den Rand 18 des Laufrads 2 erstrecken. Die hintere Scheibe 6 ist aus einem Material gefertigt, welches ausgebildet ist, an die vordere Seite mittels Laserschweißens befestigt zu werden, und zwar durch Laserlicht 10.

Für die vordere Scheibe 4 und die hintere Scheibe 6 kann grundsätzlich das gleiche Ausgangsmaterial verwendet werden. Damit jedoch das Laserlicht 10 durch eine der Scheiben hindurchtreten kann, sollte entweder die vordere Scheibe 4 oder die hintere Scheibe 6 aus einem transmissiven Material und die jeweils andere Scheibe aus einem Laserlicht-absorptiven Material gefertigt werden, welches unter Einfluss von Laserlicht 10 schmilzt. Beim Ausführungsbeispiel gemäß Fig. 1 ist die vordere Scheibe aus Laserlicht-transmissiven Material und die hintere Scheibe aus einem Material, welches Laserlicht absorbieren kann. Wie aus Fig. 1 ersichtlich ist, tritt Laserlicht 10, welches auf die vordere Scheibe 4 auftrifft, durch diese Scheibe 4 hindurch und wird in den Scheitelbereichen 12 der Schaufeln 8 der Scheibe 6 absorbiert.

Die zweite, hintere Deckscheibe 6 kann aus einem Kunststoff gefertigt sein, der mit Pigmenten versehen ist, so dass sie Laserlicht-absorptiv ist. Die erste, vordere Deckscheibe 4 kann aus demselben Kunststoff aber ohne Pigmente gefertigt sein, so dass sie Laserlicht-transmissiv ist.

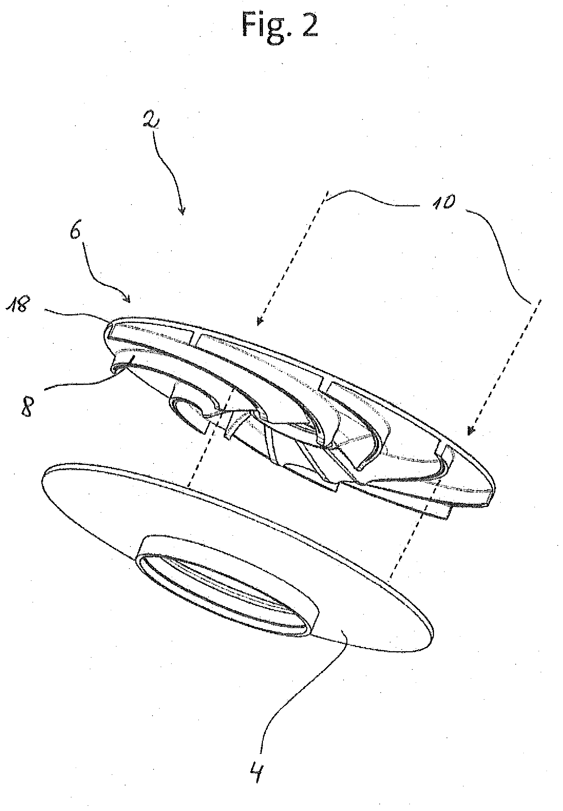

Bei der Ausführungsform gemäß Fig. 2 umfasst das Laufrad 2 eine vordere Deckscheibe 4, die aus einem Laserlicht-absorptiven Material gefertigt ist, und eine hintere Deckscheibe 6 aus einem Laserlicht transmissiven Material. Die hintere Deckscheibe 6 und die vordere Deckscheibe 4 sind ausgebildet, um unter Verwendung der gleichen Methode, wie mit Bezug auf Fig. 1 beschrieben wurde, gefügt zu werden. Laserlicht 10 tritt durch die hintere Deckscheibe 6 durch die Schaufeln 8 hindurch und wird in der vorderen Scheibe 4 absorbiert.

Hier kann die erste, vordere Deckscheibe 4 aus einem Kunststoff gefertigt sein, der mit Pigmenten versehen ist, so dass sie Laserlicht-absorptiv ist, während sie zweite, hintere Deckscheibe 6 aus demselben Kunststoff aber ohne Pigmente gefertigt sein kann, so dass sie Laserlicht-transmissiv ist.

Als Material kann vorzugsweise Polyethersulfon (PES) verwendet werden.

Der Kunststoff kann mit 1% bis 40% Glasfasern verstärkt sein, bevorzugt mit 10% bis 30%

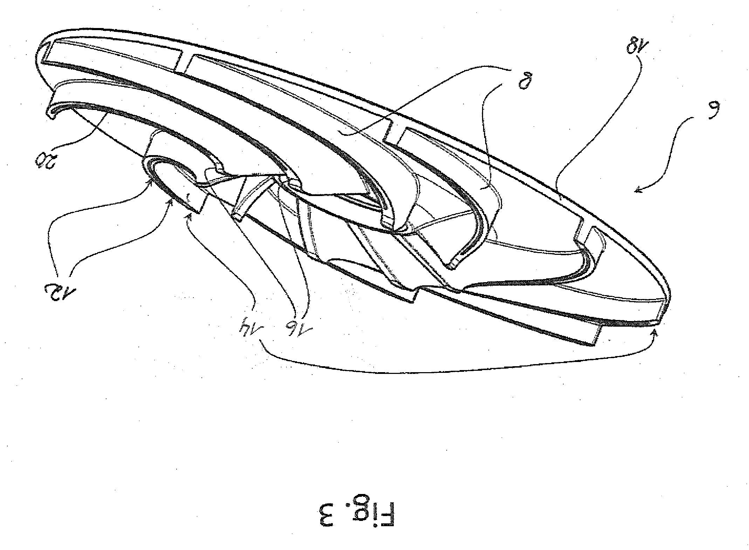

Die hintere Deckscheibe 6 (nach Zusammenfügen mit der vorderen Deckscheibe 4) wird mit Bezug auf Fig. 3 näher beschrieben. Die hintere Deckscheibe 6 umfasst neun Schaufeln 8, die in gleichem Abstand zueinander entlang dem Umfang 18 der hinteren Deckscheibe 6 angeordnet sind. Laserlicht 10 soll durch die vordere Deckscheibe 4 hindurchtreten, wie mit Bezug auf Fig. 1 beschrieben wurde, und soll auf den Scheitellinien 12 der Schaufeln 8 der hinteren Deckscheibe 6 absorbiert werden. In Fig. 3 ist der erste Abschnitt 20 des Scheitelbereichs 12, der eine Schweißverbindung mit der vorderen Deckscheibe 4 aufweist, dunkler gezeichnet, weil er aufgund des absorbierten Laserlichts geschmolzen ist, während der zweite, äußere oder dritte, innere Abschnitt 14 oder 16 des Scheitelbereichs 12, der frei von einer Schweißverbindung ist, weil er nicht geschmolzen ist, heller eingezeichnet ist.

Das geschmolzene Material ist also dunkler eingezeichnet als das übrige Material der hinteren Deckscheibe 6. Kein Laserlicht 10 ist im jeweiligen inneren Abschnitt 16 oder äußeren Abschnitt 14 des Scheitelbereichs 12 der Schaufeln 8 der hinteren Deckscheibe 6 absorbiert worden.

Die vordere Deckscheibe 4 und die hintere Deckscheibe 6 können unter Verwendung von Licht jeder geeigneten Laserlichtquelle 10 zusammengefügt werden. Vorzugesweise wird jedoch ein Abtast-Verfahren angewandt, bei welchem das Laserlicht an verschiedenen Stellen des Licht aufnehmenden Teils (z.B. Deckscheibe 6) als eine Funktion der Zeit absorbiert wird. Auf diese Weise kann eine strukturelle Verformung der Stellen aufgrund von Überhitzung vermieden werden.

Im Allgemeinen ist es möglich, eine vordere Deckscheibe 4 und eine hintere Deckscheibe 6 zu verwenden, die aus einem transmissiven Material gefertigt sind, mit Ausnahme derjenigen Bereiche der Deckscheiben 4, 6, die ausgebildet sind, um zu schmelzen, wenn das Laserlicht 10 absorbiert wird. Derjenige Bereich der Deckscheiben, der ausgebildet ist, um zu schmelzen, wenn Laserlicht absorbiert wird, sollte demnach geeignet sein, das Laserlicht zu absorbieren.

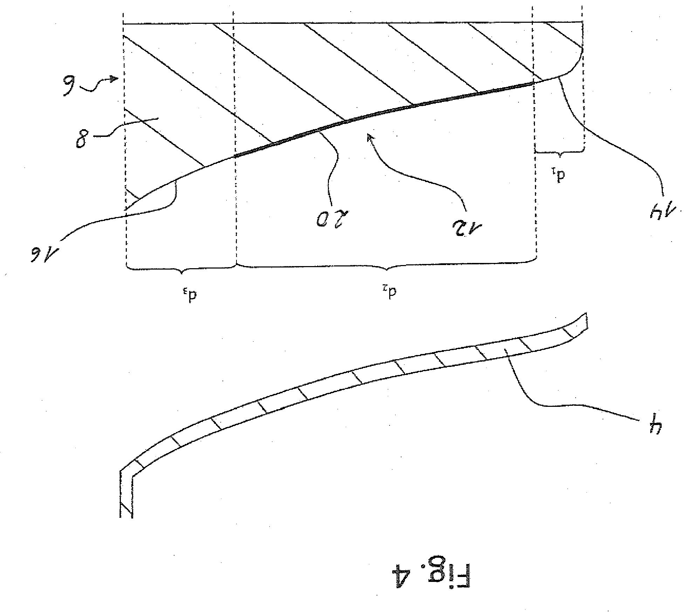

Die querschnittsartige Darstellung gemäß Fig. 4 zeigt eine Hälfte einer vorderen Deckscheibe eines Laufrads 2 und die darunterliegende Schaufel 8. Nur der erste, mittlere Abschnitt 20 des Scheitelbereichs 12 der Schaufel 8 der Deckscheibe 6 wird durch Schweißen mit der Deckscheibe 4 verbunden. Dieser geschweißte Abschnitt 20 ist umgeben von einen zweiten, äußeren Abschnitt 14 und einem dritten, inneren Abschnitt 16, die beide frei von einer Schweißverbindung bleiben. Die vordere Deckscheibe 4 des Laufrads 2 ist durch die Schaufeln 8 beabstandet von der hinteren Deckscheibe 6. Die radiale Kontur der vorderen Deckscheibe 4 entspricht der Kontur der Schaufel 8. Wie des Weiteren zu erkennen ist, ist die Länge d₂ des geschweißten Abschnitts 20 größer als die Länge d₁ des äußeren Abschnitts 14 und die Länge d₃ des inneren Abschnitts 16. Indem der äußere Abschnitt 14 und der innere Abschnitt 16 des Scheitelbereichs 12 frei von einer Schweißverbindung sind, kann die Verformung der Schaufel 8 bzw. der Deckscheibe 4 vermieden werden, weil der äußere Abschnitt 14 und der innere Abschnitt 16 gegen die vordere Deckscheibe 4 drücken und hierdurch der erforderlichen Abstand zwischen der vorderen Deckscheibe 4 und der hinteren Deckscheibe 6 eingehalten wird.

Der zweite Abschnitt 14, der außen liegt, kann sich über eine Länge des Scheitelbereichs 12 erstrecken, welche 1 % bis 20 %, insbesondere 5 % bis 10 %, der Gesamtlänge des Scheitelbereichs 12 ausmacht.

Der dritte Abschnitt 16, der innen liegt, kann sich über eine Länge des Scheitelbereichs erstrecken, welche 1 % bis 40 %, insbesondere 10 % bis 20 %, der Gesamtlänge des Scheitelbereichs ausmacht.

Das Laufrad kommt typischerweise in einer Kreiselpumpe zum Einsatz.

Das Herstellungsverfahren für das Laufrad 2 gemäß der Erfindung umfasst einen Fügeschritt zum Anfügen der ersten Deckscheibe 4 an die zweite Deckscheibe 6, wobei in dem Fügeschritt zumindest eine Schaufel 8 von der Anzahl von Schaufeln lediglich in einem ersten Abschnitt 20 des Scheitelbereichs 12 an die zweite Deckscheibe 6 geschweißt wird, und wobei zumindest ein zweiter Abschnitt 14 des Scheitelbereichs 12 nicht mittels des Fügeschritts an die zweite Deckscheibe 6 geschweißt wird, also ohne Schweißverbindung verbleibt.

Wenn das Laserlicht 10 durch das absorptive Material absorbiert worden ist, sind die vordere Deckscheibe 4 und die hintere Deckscheibe 6 bereit, um zusammengefügt zu werden, und zwar einfach durch in Kontakt bringen zueinander. Dieser Schritt kann durch ein spezielles Werkzeug ausgeführt werden.

Es ist aber auch möglich, die vordere Deckscheibe 4 und die hintere Deckscheibe 6 insbesondere auch in Kontakt zueinander zu bringen und dann erst das Laserschweißen zu beginnen. Auf diese Weise wird ein sehr präzises Fügen der vorderen Deckscheibe 4 mit der hinteren Deckscheibe 6 erreicht, so dass die Exzentrizität des Laufrads 2 und die lokalen Verformungen der geschweißten Teile minimiert werden können.

Die erste Deckscheibe 4 hat keine Nuten, so dass die Deckscheiben 4 und 6 in radialer Richtung zueinander bewegt werden können, bevor das Laserschweißen ausgeführt wird. Auf diese Weise können die beiden Deckscheiben 4 und 6 präzise justiert werden, so eine Exzentrizität es Laufrads 2 vermieden werden kann.

Als besonders vorteilhaft hat es sich erwiesen, wenn der Fügeschritt mittels Laserschweißen durchgeführt wird, und dass die erste Deckscheibe 4 und die zweite Deckscheibe 6 vor dem Schweißen in Kontakt miteinander gebracht werden.

Das Laserschweißen kann vorteilhaft mittels eines Abtastverfahrens durchgeführt werden, bei welchem die beiden Deckscheiben 4, 6 durch ein Sequenz-Laserschweißverfahren zusammengefügt werden unter Verwendung eines Abtast-Pfades, bei welchem das emittierte Laserlicht 10 entlang diesem Pfad auf verschiedene Stellen gerichtet wird und das Laserlicht 10 wiederholt den gleichen Abtast-Pfad entlang läuft.

Die vorstehend beschriebenen Kreiselräder sind aus zwei Bauteilen gebildet, nämlich der hinteren Deckschreibe 6 mit den einstückig daran angeformten Schaufeln 8 und der vorderen Deckscheibe 4. Diese beiden Bauteile werden zweckmäßigerweise als Kunststoffspritzgussbauteile hergestellt, können jedoch auch in anderer Weise gebildet sein.

### Bezugszeichenliste

- 2: Laufrad
- 4: erste, vordere Deckscheibe
- 6: zweite, hintere Deckscheibe
- 8: Schaufeln
- 10: Laserlicht
- 12: Scheitelbereich
- 14: zweiter, äußerer Abschnitt
- 16: dritter, innerer Abschnitt
- 18: Umfang
- 20: erster Abschnitt

## Patentansprüche

1. Laufrad (2) für eine Kreiselpumpe mit einer eine Anzahl von Schaufeln (8) aufweisenden ersten Deckscheibe (4) und einer mittels Schweißen an die erste Deckscheibe (4) angefügten zweiten Deckscheibe (6), wobei jede Schaufel (8) einen Scheitelbereich (12) aufweist, an welchem sie die zweite Deckscheibe (6) kontaktiert und zumindest eine Schaufel von der Anzahl von Schaufeln (8) in einem ersten Abschnitt (20) des Scheitelbereichs (12) eine Schweißverbindung mit der zweiten Deckscheibe (6) aufweist, wobei zumindest ein zweiter Abschnitt (14) des Scheitelbereichs (12) frei von einer Schweißverbindung ist, **dadurch gekennzeichnet, dass** eine von den Deckscheiben (4, 6) aus einem lichtdurchlässigen Material und die andere Deckscheibe (4, 6) zumindest teilweise aus lichtabsorptiven Material hergestellt ist, und dass die Schweißverbindung mittels Laserschweißen hergestellt ist.

2. Laufrad (2) nach Anspruch 1, **dadurch gekennzeichnet, dass** der Scheitelbereich (12) einen dritten Abschnitt (16) aufweist, der frei von einer Schweißverbindung ist.

3. Laufrad (2) nach Anspruch 2, **dadurch gekennzeichnet, dass** sich der erste Abschnitt (20) des Scheitelbereichs (12) über eine Länge (d2) erstreckt, welche größer als eine Gesamtlänge des zweiten (14) und dritten (16) Abschnitts des Scheitelbereichs (12) ist.

4. Laufrad (2) nach Anspruch 2 oder 3, **dadurch gekennzeichnet, dass** der erste Abschnitt (20) in der Mitte des Scheitelbereichs (12), der zweite Abschnitt (14) an einem äußeren Randbereich des Scheitelbereichs (12) und der dritte Abschnitt (16) an einem inneren Randbereich des Scheitelbereichs (12) der zumindest einen Schaufel (8) angeordnet ist.

5. Laufrad (2) nach einem der Ansprüche 1 bis 4, **dadurch gekennzeichnet, dass** sich der zweite Abschnitt (14) über eine Länge (d₁) des Scheitelbereichs (12) erstreckt, welche 1 % bis 20 %, insbesondere 5 % bis 10 %, der Gesamtlänge des Scheitelbereichs (12) ausmacht.

6. Laufrad (2) nach einem der Ansprüche 2 bis 5, **dadurch gekennzeichnet, dass** sich der dritte Abschnitt (16) über eine Länge (d₃) des Scheitelbereichs (12) erstreckt, welche 1 % bis 40 %, insbesondere 10 % bis 20 %, der Gesamtlänge des Scheitelbereichs (12) ausmacht.

7. Laufrad (2) nach einem der Ansprüche 1 bis 6, **dadurch gekennzeichnet, dass** nur der erste Abschnitt (20) des Scheitelbereichs (12) aus lichtabsorptivem Material hergestellt ist.

8. Laufrad (2) nach Anspruch 7, **dadurch gekennzeichnet, dass** das lichtabsorptive Material ein Kunststoff mit Pigmenten ist und das lichtdurchlässige Material der Kunststoff ohne Pigmente ist.

9. Laufrad (2) nach einem der Ansprüche 1 bis 8, **dadurch gekennzeichnet, dass** die erste Deckscheibe (4) nutenlos ausgebildet ist.

10. Kreiselpumpe mit einem Laufrad (2) gemäß einem der vorherigen Ansprüche.

## Claims

1. An impeller (2) for a centrifugal pump with a first shroud (4) having a number of blades (8) and with a second shroud (6) which is joined onto the first shroud (4) by way of welding, wherein each blade (8) has an apex region (12), at which it contacts the second shroud (6) and at least one blade of the number of blades (8) in a first section (20) of the apex region (12) has a weld connection to the second shroud (6), wherein at least one second section (14) of the apex region (12) is free of a weld connection, **characterised in that** one of the shrouds (4, 6) is manufactured of a transparent material and the other shroud (4, 6) is manufactured at least partly of light-absorptive material and that the weld connection is created by way of laser welding.

2. An impeller (2) according to claim 1, **characterised in that** the apex region (12) comprises a third section (16) which is free of a weld connection.

3. An impeller (2) according to claim 2, **characterised in that** the first section (20) of the apex region (12) extends over a length (d₂) which is larger than a total length of the second (14) and third (16) section of the apex region (12).

4. An impeller (2) according to claim 2 or 3, **characterised in that** the first section (20) is arranged in the middle of the apex region (12), the second section (14) on an outer edge region of the apex region (12) and the third section (16) on an inner edge region of the apex region (12), of the at least one blade (8).

5. An impeller (2) according to one of the claims 1 to 4, **characterised in that** the second section (14) extends over a length (d₁) of the apex region (12) which makes up 1 % to 20 % in particular 5 % to 10 % of the total length of the apex region (12).

6. An impeller (2) according to one of the claims 2 to 5, **characterised in that** the third section (16) extends over a length (d₃) of the apex region (12) which makes up 1 % to 40 % in particular 10 % to 20 % of the total length of the apex region (12).

7. An impeller (2) according to one of the claims 1 to 6, **characterised in that** only the first section (20) of the apex region (12) is manufactured of light-absorptive material.

8. An impeller (2) according to claim 7, **characterised in that** the light-absorptive material is a plastic with pigments and the transparent material is the plastic without pigments.

9. An impeller (2) according to one of the claims 1 to 8, **characterised in that** the first shroud (4) is designed without grooves.

10. A centrifugal pump with an impeller (2) according to one of the preceding claims.

## Revendications

1. Roue radiale de pompe (2) pour une pompe centrifuge avec un premier disque de couverture (4) comportant un nombre de pales (8) et un deuxième disque de couverture (6) fixé au premier disque de couverture (4) par soudure, chaque pale (8) présentant une zone de sommet (12) dans laquelle elle est en contact avec le deuxième disque de couverture (6) et au moins une pale du nombre de pales (8) présentant dans une première partie (20) de la zone de sommet (12) une liaison par soudure avec le deuxième disque de couverture (6), au moins une deuxième partie (14) de la zone de sommet (12) étant exempte de liaison par soudure, **caractérisé en ce qu'**un des disques de couvertures (4, 6) est réalisé en un matériau laissant passer de la lumière et que l'autre disque de couverture (4, 6) est au moins partiellement réalisé en un matériau absorbant de la lumière, et **en ce que** la liaison par soudure a été réalisée par soudage au laser.

2. Roue radiale de pompe (2) selon la revendication 1, **caractérisé en ce que** la zone de sommet (12) comprend une troisième partie (16) qui est exempte de liaison par soudure.

3. Roue radiale de pompe (2) selon la revendication 2, **caractérisé en ce que** la première partie (20) de la zone de sommet (12) s'étend sur une longueur (d2) qui est supérieure à une longueur totale de la deuxième (14) et troisième (16) parties de la zone de sommet (12).

4. Roue radiale de pompe (2) selon la revendication 2 ou 3, **caractérisé en ce que** la première partie (20) est disposée au milieu de la zone de sommet (12), la deuxième partie (14) est disposée dans une zone périphérique extérieure de la zone de sommet (12) et la troisième partie (16) est disposée dans une zone périphérique intérieure de la zone de sommet (12) de ladite au moins une pale (8).

5. Roue radiale de pompe (2) selon l'une des revendications 1 à 4, **caractérisé en ce que** la deuxième partie (14) s'étend sur une longueur (d₁) de la zone de sommet (12) qui représente 1 % à 20 %, notamment 5 % à 10 %, de la longueur totale de la zone de sommet (12).

6. Roue radiale de pompe (2) selon l'une des revendications 2 à 5, **caractérisé en ce que** la troisième partie (16) s'étend sur une longueur (d₃) de la zone de sommet (12) qui représente 1 % à 40 %, notamment 10 % à 20 %, de la longueur totale de la zone de sommet (12).

7. Roue radiale de pompe (2) selon l'une des revendications 1 à 6, **caractérisé en ce qu'**uniquement la première partie (20) de la zone de sommet (12) est réalisée en un matériau absorbant de la lumière.

8. Roue radiale de pompe (2) selon la revendication 7, **caractérisé en ce que** le matériau absorbant de la lumière est une matière synthétique avec des pigments et le matériau laissant passer de la lumière est la matière synthétique sans pigments.

9. Roue radiale de pompe (2) selon l'une des revendications 1 à 8, **caractérisé en ce que** le premier disque de couverture (4) est réalisé sans fente.

10. Pompe centrifuge avec une roue radiale de pompe (2) selon l'une des revendications précédentes.
